# EUROPEAN PATENT SPECIFICATION

(11) **EP 1 379 379 B1**
(45) Date of publication and mention of the grant of the patent: **28.02.2007**
(21) Application number: 02707018.4
(22) Date of filing: 02.04.2002
(51) Int. Cl.: B32B 15/08, B32B 3/20, E04C 2/34, E04C 2/292

(54) **IMPROVED STRUCTURAL SANDWICH MEMBERS**
VERBESSERTE SANDWICH-BAUELEMENTE
ELEMENTS AMELIORES STRUCTURAUX PRIS EN SANDWICH

(30) Priority: 02.04.2001 GB 0108203
(43) Date of publication of application: 14.01.2004
(73) Proprietor: Intelligent Engineering (Bahamas) Limited, Nassau (BS)
(72) Inventor: KENNEDY, Stephen, John, Ottawa, Ontario K1Y 0N2 (CA)
(74) Representative: Leeming, John Gerard
(86) International application number: PCT/GB2002/001565
(87) International publication number: WO 2002/078948

(56) References cited:
- WO-A-01/32414
- DE-A- 2 913 074
- GB-A- 2 267 678
- US-A- 3 935 357
- US-A- 5 658 644

## Description

The present invention relates to structural sandwich plate members which comprise two outer metal plates and a core of plastics or polymer material bonded to the outer metal plates with sufficient strength to substantially contribute to the structural strength of the member.

Structural sandwich plate members are described in US 5,778,813 and US 6,050,208, and comprise outer metal, e.g. steel, plates bonded together with an intermediate elastomer core, e.g. of unfoamed polyurethane. These sandwich plate systems may be used in many forms of construction to replace stiffened steel plates and greatly simplify the resultant structures, improving strength and structural performance (stiffness, damping characteristics) while saving weight. Further developments of these structural sandwich plate members are described in International Patent Application GB00/04198. As described therein, foam forms may be incorporated in the core layer to reduce weight and transverse metal sheer plates may be added to improve stiffness.

According to the teachings of GBOO/04198 the foam forms can be either hollow or solid. Hollow forms generate a greater weight reduction and are therefore advantageous. The forms described in this document are not confined to being made of light weight foam material and can also be make of other materials such as wood or steel boxes.

WO 01/32414 discloses structural sandwich plate members including hollow forms.

It is an aim of the present invention to provide an alternative arrangement for constructing structural sandwich plate members that are generally lighter weight than such members which have solid plastic polymer or elastomer cores.

According to the present invention there is provided a structural sandwich plate member comprising: first and second outer metal plates; a plastics or polymer core bonded to said outer metal plates with sufficient strength to transfer shear forces therebetween; and a hollow member defining a space in the core free of the core material wherein the hollow member is made of extruded plastic.

The materials, dimensions and general properties of the outer metal plates of the structural sandwich plate member of the invention may be chosen as desired for the particular use to which the structural sandwich plate member is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208.

The hollow member is an extruded elongate member made of a plastic material such as polyethylene or polypropylene. Extruded plastic members are advantageous as they are relatively light weight and easy to manufacture compared to wood or metal members. They also benefit from being more rigid than foam forms and therefore less susceptible to damage. Additional features, such as internal ribs, can be easily incorporated into the design of hollow members made of extruded plastic without significantly impacting the cost. The hollow form is preferably made out of expandable polypropylene foam, for example Neopolen^{™}. These are advantageously lightweight and give the surface skin of the member a higher density which helps temperature resistance. The hollow member may comprise half-shells as these are simple to manufacture.

The hollow member may comprise a plurality of elongate tubes joined by webs extending generally parallel to the outer metal plates. The plurality of tubes may be integrally formed with the joining webs or formed as separate items with engaging means provided on the distal ends of the joining webs. Preferably, the joining webs are provided with one or more apertures to improve flow of elastomer during a casting process and to ensure a continuous elastomer connection between the outer plates of the structural sandwich plate member.

The hollow member may comprise snap together parts. Specifically the half-shells or separate tubes may snap together so assembly is easy, fast and does not require any additional materials. Alternatively, the hollow member parts may incorporate overlapping joints that facilitate joining with adhesives or glue.

The hollow member may also take the form of a plurality of separate elongate tubes held by at least one support member.

Plastic forms are particularly suitable for manufacturing separate forms or tubes as the rigidity allows easy but firm interconnection through engaging means or a support member. By forming individual connecting members the user can design the complete hollow form according to the specific requirements for the given application.

The hollow member may be provided with at least one internal reinforcing ribs and/or at least one external ribs for reinforcing and for spacing the hollow member from the outer metal plates (face plates) or through-thickness metal elements of the structural sandwich plate member or from other hollow members included in the structural sandwich plate member. The support member, or the hollow member where no support member is provided, may also provide locating means for receiving one or more reinforcing (shear) plates embedded in the elastomer of the structural sandwich plate member.

The present invention also provides various hollow members for defining voids in a structural sandwich plate member, various end caps for such hollow members and structures constructed with such structural sandwich plate members.

Further, the invention provides a method of manufacturing a structural sandwich plate member comprising the steps of: providing first and second outer metal plates in a spaced apart relationship with an extruded plastic hollow member having an internal space located therebetween; injecting uncured plastics or polymer to fill the space defined between said outer metal plates save for the internal space of said extruded plastic hollow member; and allowing said plastics or polymer material to cure to bond said outer metal plates together with sufficient strength to transfer shear forces therebetween.

The present invention will be described below with reference to exemplary embodiments and the accompanying schematic drawings, in which:
Figure 1 is a cross-sectional view of a hollow member according to a first embodiment of the present invention;
Figure 2 is a perspective view of the hollow member of Figure 1;
Figure 3 is a cross-sectional view of a structural sandwich plate member according to the invention incorporating the hollow member of Figure 1;
Figure 4 is a cross-sectional view of a hollow member according to a second embodiment of the present invention;
Figure 5 is a cross-sectional view of a structural sandwich plate member according to the invention incorporating a hollow member according to the second embodiment of the invention;
Figure 6 is a cross-sectional view of a support member for supporting hollow members according to a third embodiment of the present invention;
Figure 7 is a perspective view of the support member of Figure 6;
Figures 8 to 10 are respectively lateral cross-sectional, longitudinal cross-sectional and perspective views of the hollow member of the third embodiment of the present invention;
Figure 11 is a perpendicular view of the hollow member of the third embodiment with a variant end cap;
Figure 12 is a cross-sectional view of a structural sandwich plate member incorporating a hollow member according to the third embodiment and the variant end cap of Figure 11;
Figures 13 and 14 are perspective views illustrating the manner of use of the support member and hollow members of the third embodiment of the present invention;
Figures 15, 16 and 17 are lateral cross-sectional views of alternative hollow members according to the third embodiment of the present invention;
Figure 18 is a cross-sectional view of an alternative support member according to the third embodiment of the present invention;
Figures 19 and 20 are respectively cross-sectional and perspective views of a hollow member according to a fourth embodiment of the present invention;
Figures 21 and 22 are respectively cross-sectional views of hollow members according to variants of the fourth embodiment of the present invention;
Figure 23 is a cross-sectional view of a structural sandwich plate member including a hollow member according to a fifth embodiment of the invention; and
Figure 24 is a perspective view of an alternative manner of use of hollow members according to the invention.
Figure 25 is a cross-sectional view of a half section of a moulded hollow foam section, the sixth embodiment of the invention.

In the various drawings, like parts are indicated by like references.

### Embodiment 1

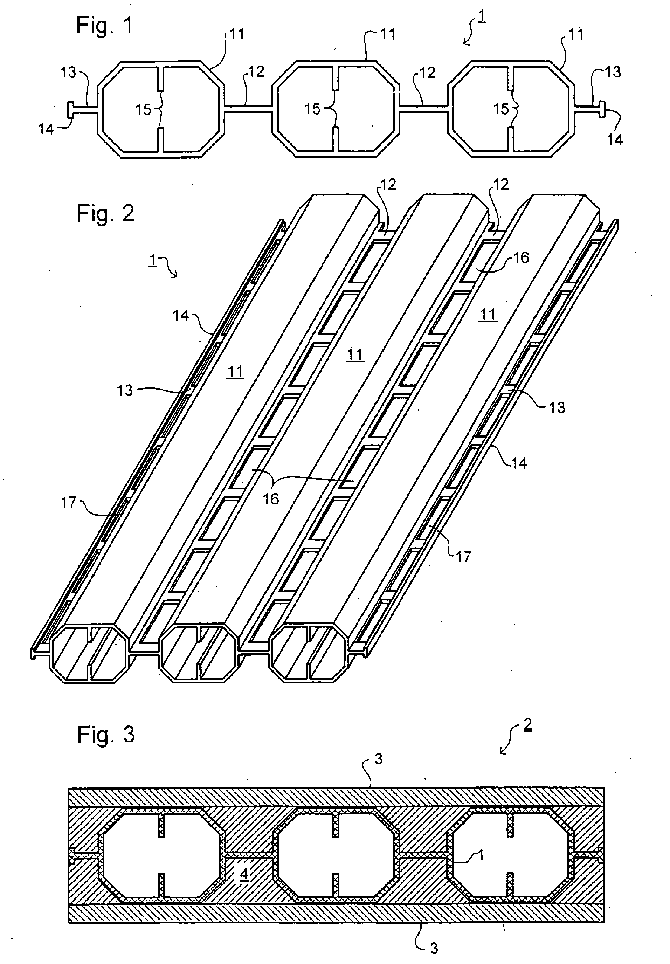

Figures 1 and 2 show in cross-section and in perspective a hollow member 1 according to a first embodiment of the invention which is to be used to define voids in the elastomer core of a structural sandwich plate member 2, as shown in Figure 3. The hollow member 1 exhibits a multiple cell construction with internal reinforcement.

As shown in Figures 1 and 2, the hollow member 1 comprises three elongate tube-like portions 11 joined together by webs 12 to form a flat raft-like structure. Additional webs 13 project from the outer sides of the outer tube-like portions 11 and are terminated by perpendicular flanges 14; these act to space apart adjacent hollow members 1 or to space the hollow member 1 from the edge of a mould in which the structural sandwich plate member is formed or from a through-thickness metal member defining the perimeter of a cell of the structural sandwich plate member. The tube-like portions 11 are, as shown, generally octagonal in form with relatively wide top and bottom faces (as illustrated) and relatively narrow side and corner faces. The tube-like portions 11 are provided with internal stiffening ribs 15 projecting inwardly from the inner sides of the top and bottom faces. The cross-section of the tube-like portions 11 as well as the size, positioning and number of reinforcing ribs 15 may be varied as desired to provide a desired shape of void in the completed structural sandwich plate member for convenience in manufacturing, and to provide the necessary physical properties of the hollow member.

As can be seen in Figure 2, the joining webs 12 as well as the spacing webs 13 are provided with a plurality of apertures 16, 17; these serve to assist flow of elastomer during manufacture of a structural sandwich plate member and also ensure that there is a continuous elastomer bond between the upper and lower metal plates of the structural sandwich plate member 2.

A completed structural sandwich plate member 2 is shown in section in Figure 3. It can there be seen that the hollow member 1 defines elongate voids in the elastomer core 4 which bonds together the outer metal plates 3. The primary function of the hollow member 1 is to define voids to optimise the location of elastomer to provide an effective lightweight structural sandwich plate member 2 with desired structural performance characteristics. The shape, size, spacing and number of the tube-like portions 11 will therefore be selected according to the cavity plan dimensions and the purpose for which the structural sandwich plate member 2 is to be used to provide the necessary weight saving whilst still providing desired strength and other mechanical properties. Generally, the hollow member 1 does not contribute significantly to the structural strength of the structural sandwich plate member 2. The hollow member 1 and in particular the tube-like portion 11 need only have sufficient strength, determined by the material selected, the shape of the tube-like portions 11 and the reinforcing ribs 15, to resist pressures occurring during injection of the elastomer 4 and to provide support for the upper of metal plates 3 to maintain it at the desired separation then to produce a structural sandwich plate member of desired thickness. The hollow member 11 can have quite thin walls and reinforcing ribs 15 can strengthen thin walled structures sufficiently to resist these pressures.

A secondary, optional, function of the hollow member 1 is to allow the passage of conduits, piping, cabling, wiring, ventilation or heating systems and other services, and it may be shaped or constructed with appropriate details to facilitate this function.

To manufacture either prefabricated or built in stu structural sandwich plate members 2, the lower of the outer metal plates 3 is welded to internal or perimeter extruded or rolled profiles or to metal framing members. The hollow member 1 with end caps 61 is then placed on top, arranged in the desired orientation and connected to couplings 616 if required. The second metal plate is then put in position and welded in place (if required) to form an airtight cavity. In the case of weld free prefabricated moulded structural sandwich plate members there are no edge members and the plates 3 are not welded. The edges of the cavity are defined by the mould. Once all the components are in position, uncured elastomer is injected through injection ports (not shown) to fill the space between the lower and upper metal plates 3 and around the hollow member 1. Once the elastomer has cured, the hollow members are made solid with the elastomer to form a lightweight structural composite core. The elastomer will, in general, be injected at an elevated temperature and pressure so that the hollow member 1 must be made of a plastic material with sufficient thermal properties and have sufficient mechanical properties to maintain its shape under the injection conditions. In general the hollow member 1 is not required to maintain its exact shape during the injection procedure; some shrinkage and/or deformation can be permitted provided this is taken into account in determining the amount of elastomer to be injected into the structural sandwich plate member that large distortions of the tube-like portions are avoided and that the void space remains intact.

In the above method of manufacture of the structural sandwich plate member 2, whether prefabricated, made in a mould or in situ, the injection ports and vent holes are generally sealed with metal plugs and ground flush after the elastomer has cured.

### Embodiment 2

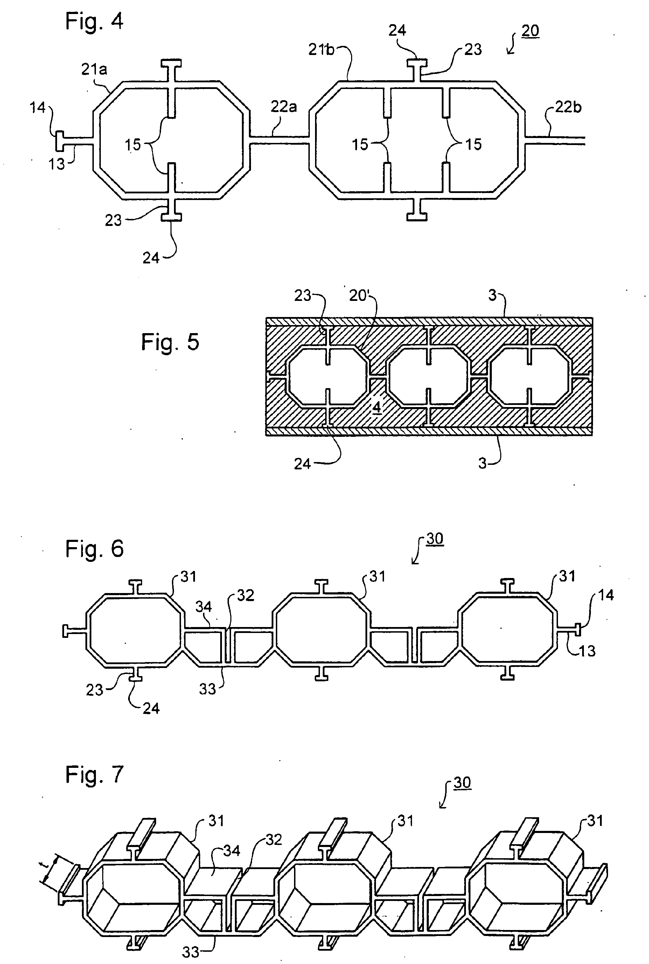

Figure 4 shows in cross-section part of a hollow member 20 according to a second embodiment of the present invention. This hollow member fulfills the same function as the hollow member 1 of the first embodiment but illustrates some additional features that may be used as desired. For example, the tube-like portions 21a, 21b of the hollow member 20 are of different shapes and the latter is provided with four internal reinforcing ribs 15. Also, the joining webs 22a, 22b between tube-like portions 21a, 21b may be of different widths. Further, the hollow member 20 of Figure 4 includes additional vertical spacing webs 23 projecting from the upper and lower surfaces of the tube-like portions and terminated by flanges 24. The vertical spacing webs 23 serve to space the hollow member 20 away from the outer metal plates 3 during manufacture of the structural sandwich plate member 2, as shown in Figure 5.

### Embodiment 3

A third embodiment of the invention is shown in Figures 6 to 18; in the third embodiment the voids are defined by simple elongate tubes which are held in position by support members. The elongate tubes form single-cell hollow members, with or without internal reinforcement.

A support member 30 according to the third embodiment is shown in cross-section and perspective in Figures 6 and 7. The support member 30 comprises three sleeve portions 31 which are sized and shaped to closely receive a hollow tube member. The sleeve portions 31 are spaced apart by webs 33, 34 which also define an upwardly open slot 32. The upper and lower faces of the sleeve portions 31 as well as the outer side faces of the outer ones of the sleeve portions 31 are provided with horizontal and vertical spacing webs 13, 23. As shown more clearly in Figure 6, the support member 30 is relatively short having a length t which may be of the order of 50mm. The support member 30 may conveniently be made by extrusion and cut to length.

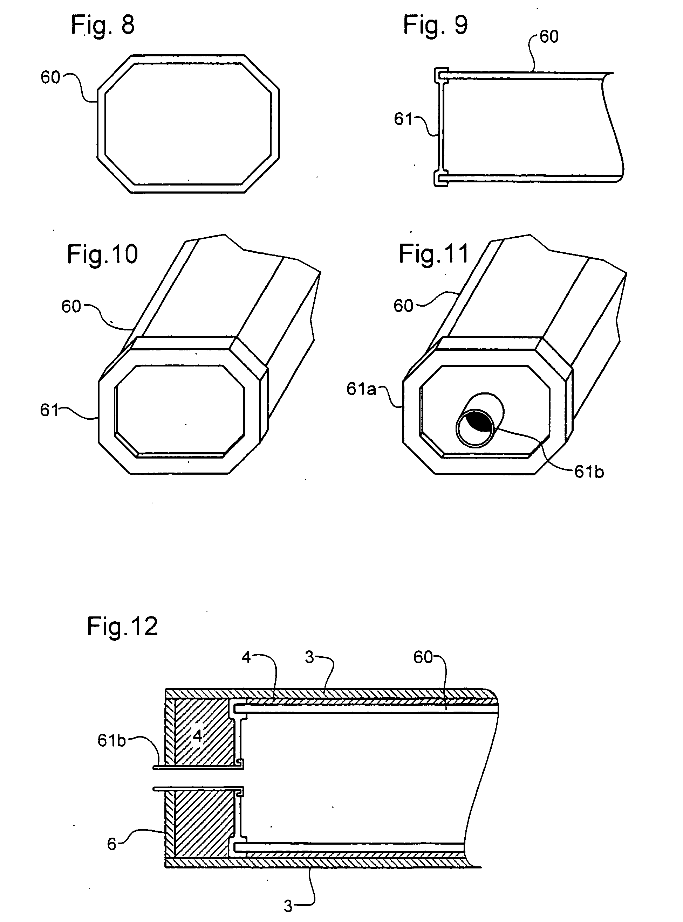

A typical hollow tube which fits in the support member 30 is illustrated in Figures 8 to 10. As can there be seen, the tube has an octagonal cross-sectional form of generally uniform wall thickness with the outer profile matching the inner profile of the sleeve portions 31 of support member 30. The ends of the tube members 60 are in general closed by press-fit sealed end caps 61, though these may be omitted in applications where the tubes will abut and make an adequate seal to side walls of a mould in which the structural sandwich plate member is formed or side walls of a structural sandwich plate member with built-in couplings.

As shown in Figure 11, an alternative form of end cap 61a is fitted with quick connect couplings 61b that extend to and through the perimeter plates, spacers or members of a cavity as illustrated in Figure 12. The quick connect couplings 61b allow easy access to the hollow space for the passing of cabling, wiring, conduits and other services. Special couplings may be included for air ventilation and heating systems. Couplings may be made continuous with the hollow tubes prior to the injection of the elastomer or inserted into drilled holes after injection.

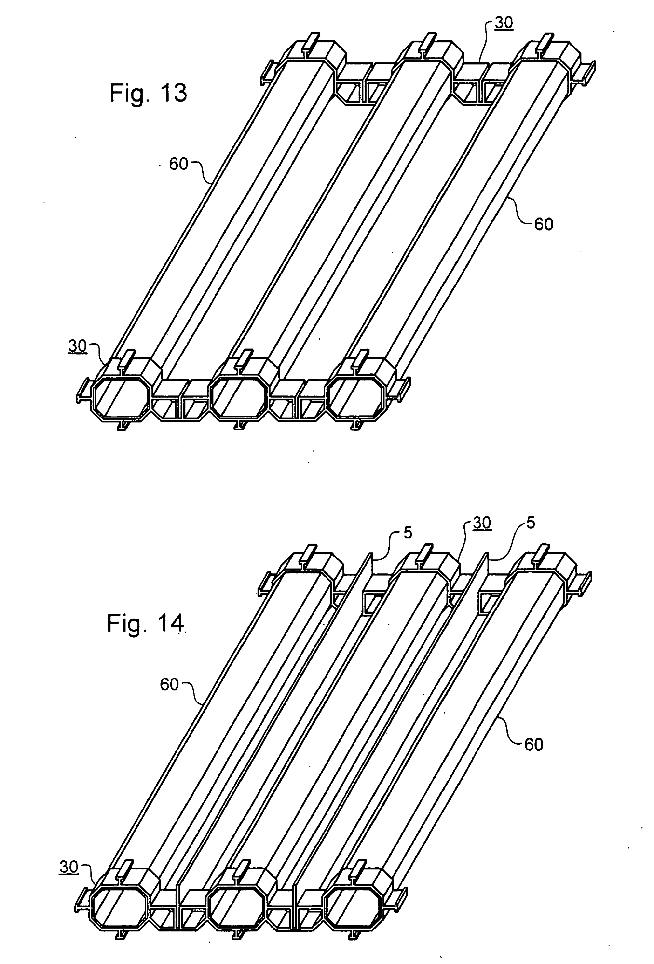

As shown in Figure 13, the hollow tubes 60 are inserted into the sleeve portions 31 of the sleeves 30 which hold the tubes 60 in a parallel spaced apart arrangement. The slots 32 defined in the webs 33, 34 joining the sleeve portions 31 of the support members 30 can accept a vertical metal plate as shown in Figure 14. The resultant assembly is then formed into a structural sandwich plate member in the same manner as described for the first embodiment. In the completed structural sandwich plate member, the vertical plates 5 act as shear plates providing additional stiffness. Note that the shear plates 5 may be perforated and may be welded to one or both of the outer metal plates of the structural sandwich plate member before the elastomer is injected and cured.

It will of course be appreciated that where long tubes are used additional support members may be provided at intervals along them and the tubes may project beyond the ends of the support members. Compared to the first embodiment, the third embodiment may be more versatile since the hollow tube structure (e.g. wall thickness and internal reinforcing) may be varied independently of the support members. The third embodiment may also have a reduced manufacturing cost since the simple hollow tubes 60 can be manufactured very cheaply.

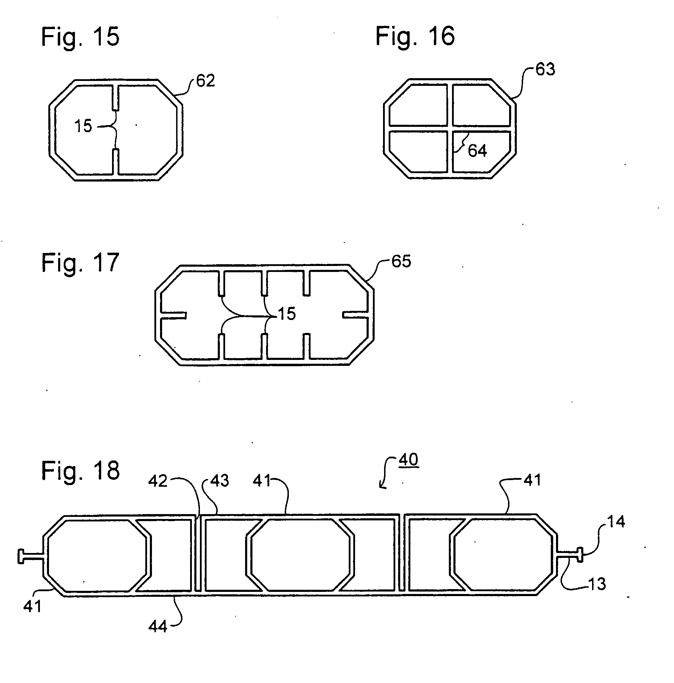

Variations on the form of hollow tubes 60 are of course possible; some such variations are shown in Figures 15 to 17. As shown in Figure 15, tube 62 includes vertical internal reinforcing ribs 15 extending from the middles of the upper and lower faces of the tube. Tube 63 shown in Figure 16 includes horizontal and vertical reinforcing ribs 64 which meet in the middle of the tube to form a cross. Tube 65 shown in Figure 17 is wider than the tubes 60, 62 and 63 and has a total of eight internal reinforcing ribs, including two extending horizontally from the inner side walls of the tube.

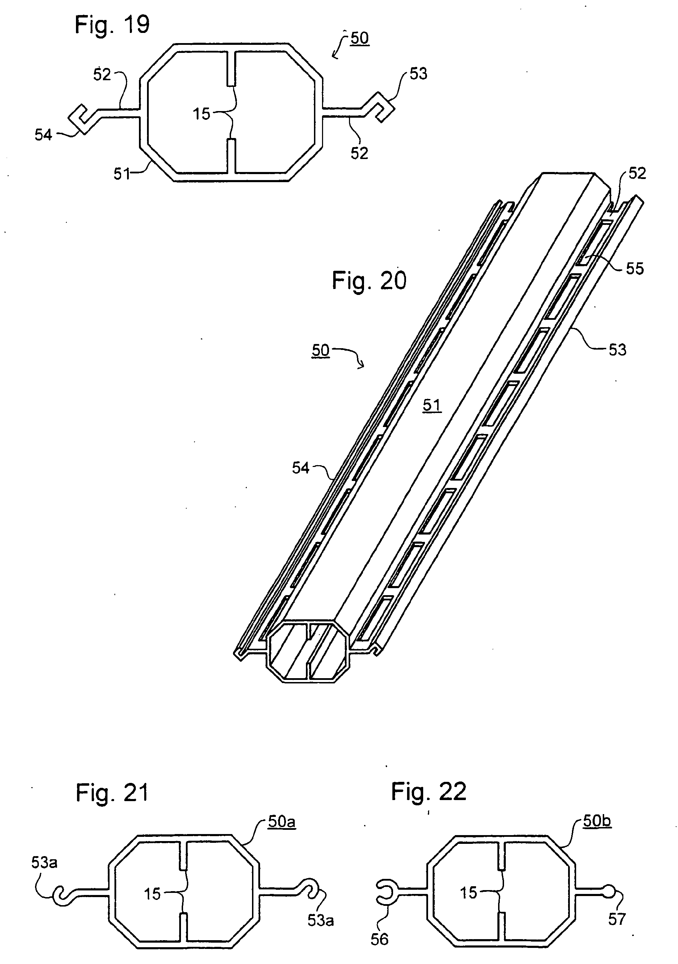

Similarly, variations in the shape of the support member are also possible. One such variation is shown in Figure 18. Other cross-sectional shapes, e.g. square, rectangular, circular, elliptical, for the hollow tube may also be used. The shape and internal structure of the tube may also be chosen dependent upon services which are to be passed through it. Support member 40 shown in Figure 18 differs from support member 30 in that the joining webs 43, 44 extend as continuations of the top and bottom faces of the octagonal sleeve portions 41 so as to define deeper slots 42 for receiving the shear plates 5.

### Embodiment 4

A fourth embodiment of the present invention is shown in Figures 19 to 22. The hollow members of the fourth embodiment are single-celled.

In the fourth embodiment, the hollow member 50 comprises a tube-like member, again taking the form in cross-section of an octagon with wider top faces than side faces, with joining webs 52 projecting horizontally from the side faces. The joining webs 52 are terminated with complimentary mating portions 53, 54 by which a plurality of like hollow members placed side-by-side can be engaged. As best seen in Figure 20, the joining webs 52 may be pierced by apertures 55 which perform the same function as the apertures 16 and 17 in the first embodiment.

Figures 21 and 22 show variants on the hollow member of the fourth embodiment. In the hollow member 50a of Figure 21 the mating portions 53a at the ends of the joining webs 52 are more rounded. In the hollow member 50b of Figure 22 one mating portion 56 defines an elongate groove whilst mating portion 57 defines a complimentary rib.

The hollow members of the fourth embodiment have the advantage that they can be manufactured with a relatively small extrusion die but quickly clipped together to form larger structures for the construction of large structural sandwich plate members.

Mating portions as provided in the fourth embodiment may also be provided on hollow members of the first and second embodiments and support members of the third embodiment. In this way complex structures of hollow members can quickly be built up from components extruded with a simple die. Also, such hollow members can be used in curved panels if the mating portions allow connection at an angle or if the joining webs have some flexibility.

### Embodiment 5

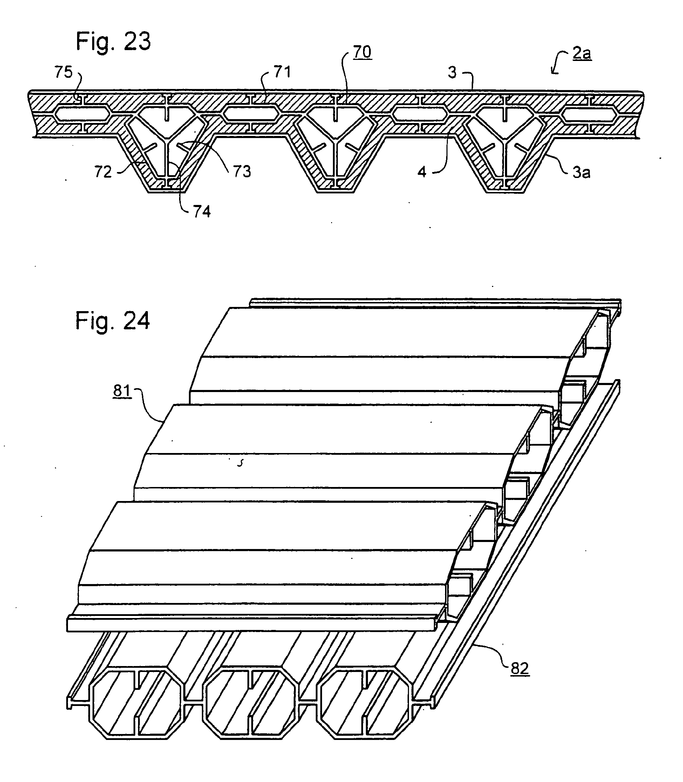

Figure 23 illustrates a fifth embodiment of the invention which provides a multi-celled hollow member 70 suitable for use in structural sandwich plate members that have on or more corrugated outer plates.

As can be seen in Figure 23 the hollow member 70 comprises alternate small and large tube-like portions 71, 72. The large tube-like portions 72 have a cross-section in the form of an irregular polygon shaped to fit in the space defined by the outwardly projecting parts of the corrugated lower weld plate 3a. The small tube-like portions 71 are flatter in cross-section to fit between the inwardly projecting parts of the corrugated lower metal plate 3b and flat upper plate 3.

The large tube-like portions 72 are provided with reinforcing ribs 73, 74. Reinforcing ribs 73 extend a short distance inwardly from the large faces of the large tube-like portions 72 whilst reinforcing ribs 74 extend from the smaller faces to meet in a Y-formation. The small tube-like portions 71 are, in this case, not provided with reinforcing ribs but such ribs can be provided if desired. Both large and small tube-like portions 71, 72 are provided with spacers 75.

The hollow member 70 may be extruded as a single multi-celled unit, as shown, or assembled from smaller units, e.g. single- or two-celled, connected together by mating portions as provided in the fourth embodiment.

### Embodiment 6

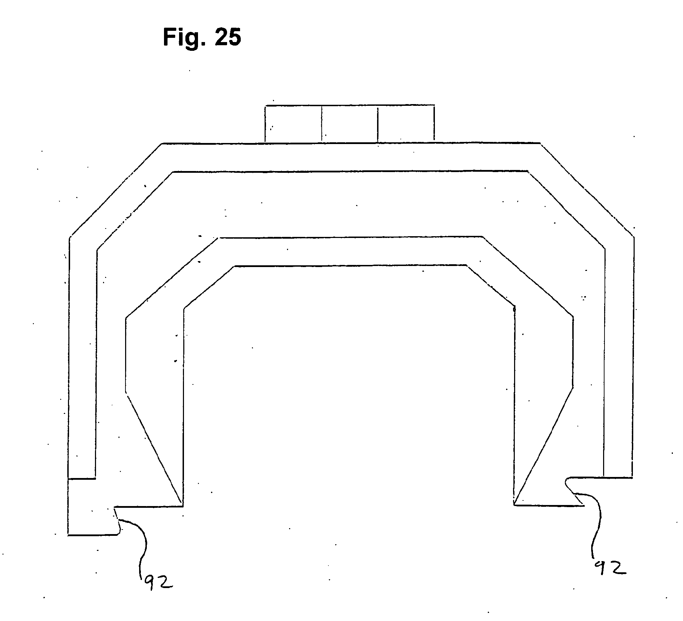

A sixth embodiment is shown in Figure 25. In this embodiment the hollow member comprises half-shells which join together to form tubes. 92 is a snap together joint. Snap together joints on separate parts of the hollow member snap together to form larger parts of the hollow member. In the example shown in Figure 25 the snap together joints are an S shape. Alternatively, the hollow member parts may incorporate overlapping joints that facilitate joining with adhesives or glue. These features, half-shells and snap together joints, can be used in conjunction with any of the features of previous embodiments.

Whilst we have described above preferred embodiments of the present invention it will be understood that modifications and variations to these may be made without departing from the scope of the invention, which is defined by the appended claims. It will also be appreciated that multiple layers of hollow members may be used in a simple structural sandwich plate member. The hollow members 81, 82 of different layers in such an arrangement may be arranged perpendicularly, as shown in Figure 24, or at another angle.

## Claims

1. A structural sandwich plate member comprising: first and second outer metal plates; a plastics or polymer core bonded to said outer metal plates with sufficient strength to transfer shear forces therebetween; and a hollow member defining a space in the core free of the core material wherein the hollow member is made of extruded plastic.

2. A structural sandwich plate member according to claim 1 wherein the hollow member comprises half-shells.

3. A structural sandwich plate member according to claim 1 or 2 wherein the hollow member comprises a plurality of elongate tubes joined by webs extending generally parallel to the outer metal plates.

4. A structural sandwich plate member according to claim 3 wherein said plurality of tubes are integrally formed with the joining webs as a single unit.

5. A structural sandwich plate member according to claim 3 wherein each of said plurality of tubes is formed as a separate item having at least one projecting joining web provided at its distal ends with engaging means.

6. A structural sandwich plate member according to any one of claims 1, 2, 3 or 5 wherein the hollow member comprises snap together parts.

7. A structural sandwich plate member according to any one of the preceding claims wherein the hollow member is made of expanded polypropylene.

8. A structural sandwich plate member according to any one of claims 3 to 7 wherein said plurality of tubes comprises tubes of at least two different shapes or sizes.

9. A structural sandwich plate member according to any one of claims 3 to 8 or 6 wherein said joining webs are provided with a plurality of apertures.

10. A structural sandwich plate member according to claim 1, 6 or 7 wherein the hollow member comprises a plurality of separate elongate tubes and at least one support member for holding said elongate tube in a spaced apart arrangement.

11. A structural sandwich plate member according to any one of the preceding claims wherein the hollow member is provided with at least one internal reinforcing rib.

12. A structural sandwich plate member according to any one of the preceding claims wherein said hollow member is provided with at least one external rib for reinforcing and/or spacing the hollow member from the outer metal plates of the structural sandwich plate member or from other hollow members included in the structural sandwich plate member.

13. A structural sandwich plate member according to any one of the preceding claims wherein said hollow member is provided with support means for receiving and locating at least one reinforcing plate.

14. A structural sandwich plate member according to any one of the preceding claims comprising at least two layers of hollow members.

15. A structural sandwich plate member according to any one of the preceding claims wherein the core is made of an elastomer.

16. A method of manufacturing a structural sandwich plate member comprising the steps of: providing first and second outer metal plates in a spaced apart relationship with an extruded plastic hollow member having an internal space located therebetween; injecting uncured plastics or polymer to fill the space defined between said outer metal plates save for the internal space of said extruded plastic hollow member; and allowing said plastics or polymer to cure to bond said outer metal plates together with sufficient strength to transfer shear forces therebetween.

## Patentansprüche

1. Sandwichstrukturplattenbauteil mit einer ersten und einer zweiten äußeren Metallplatte, einem Kunststoff oder Polymerkern, der mit den äußeren Metallplatten mit ausreichender Festigkeit verbunden ist, um Scherkräfte zwischen ihnen zu übertragen; und einem Hohlbauteil, das in dem Kern einen Raum definiert, der frei von dem Kernmaterial ist, wobei das Hohlbauteil aus extrudiertem Kunststoff hergestellt ist.

2. Sandwichstrukturplattenbauteil nach Anspruch 1, wobei das Hohlbauteil Halbschalen enthält.

3. Sandwichstrukturplattenbauteil nach Anspruch 1 oder 2, wobei das Hohlbauteil eine Mehrzahl von länglichen Rohren enthält, die durch Stege verbunden sind, die sich insgesamt parallel zu den äußeren Metallplatten erstrecken.

4. Sandwichstrukturplattenbauteil nach Anspruch 3, wobei die Mehrzahl von Rohren mit den Verbindungsstegen als eine einzige Einheit integral ausgebildet sind.

5. Sandwichstrukturplattenbauteil nach Anspruch 3, wobei jedes der Mehrzahl von Rohren als getrenntes Bauteil ausgebildet ist, das wenigstens einen vorspringenden Verbindungssteg aufweist, der an seinen distalen Enden mit Eingriffsmitteln versehen ist.

6. Sandwichstrukturplattenbauteil nach einem der Ansprüche 1, 2, 3 oder 5, wobei das Hohlbauteil zusammenschnappbare Teile enthält.

7. Sandwichstrukturplattenbauteil nach einem der vorhergehenden Ansprüche, wobei das Hohlbauteil aus expandiertem Polypropylen hergestellt ist.

8. Sandwichstrukturplattenbauteil nach einem der Ansprüche 3 bis 7, wobei die Mehrzahl von Rohren Rohre mit wenigstens zwei unterschiedlichen Formen oder Abmessungen enthält.

9. Sandwichstrukturplattenbauteil nach einem der Ansprüche 3 bis 8 oder 6, wobei die Verbindungsstege mit einer Mehrzahl von Öffnungen versehen sind.

10. Sandwichstrukturplattenbauteil nach einem der Ansprüche 1, 6 oder 7, wobei das Hohlbauteil eine Mehrzahl von getrennten länglichen Rohren und wenigstens ein Haltebauteil zum Halten der länglichen Rohre in einer von einander entfernten Anordnung enthält.

11. Sandwichstrukturplattenbauteil nach einem der vorherigen Ansprüche, wobei das Hohlbauteil mit wenigstens einer inneren Verstärkungsrippe versehen ist.

12. Sandwichstrukturplattenbauteil nach einem der vorhergehenden Ansprüche, wobei das Hohlbauteil mit wenigstens einer äußeren Rippe zum Verstärken und/oder Abstand halten des Hohlbauteils von den äußeren Metallplatten des Sandwichstrukturplattenbauteils oder von anderen Hohlbauteilen versehen ist, die in dem Sandwichstrukturplattenbauteil enthalten sind.

13. Sandwichstrukturplattenbauteil nach einem der vorhergehenden Ansprüche, wobei das Hohlbauteil mit Haltemitteln zum Aufnehmen und Anordnen wenigstens einer Verstärkungsplatte versehen ist.

14. Sandwichstrukturplattenbauteil nach einem der vorhergehenden Ansprüche, enthaltend wenigstens zwei Lagen von Hohlbauteilen.

15. Sandwichstrukturplattenbauteil nach einem der vorhergehenden Ansprüche, wobei der Kern aus einem Elastomer hergestellt ist.

16. Verfahren zum Herstellen eines Sandwichstrukturplattenbauteils, enthaltend die Schritte: Versehen einer ersten und einer zweiten äußeren Metallplatte in einer gegenseitig beabstandeten Beziehung mit einem extrudierten Hohlbauteil aus Kunststoff mit einem dazwischen angeordneten Innenraum; Einspritzen von ungehärtetem Kunststoff oder Polymer, um den zwischen den äußeren Metallplatten gebildeten Raum mit Ausnahme des Innenraums des extrudierten Hohlbauteils aus Kunststoff zu füllen; und Ermöglichen eines Aushärtens des Kunststoffs oder Polymers, um die äußeren Metallplatten mit zum Übertragen von Scherkräften zwischen ihnen ausreichender Stärke zu verbinden.

## Revendications

1. Elément structurel de plaque en sandwich comprenant : des première et deuxième plaques métalliques extérieures ; une âme en plastique ou en polymère collée auxdites plaques métalliques extérieures avec une résistance suffisante pour transférer les forces de cisaillement entre elles ; et un élément creux définissant un espace dans l'âme exempte du matériau de l'âme, l'élément creux étant fait de plastique extrudé.

2. Elément structurel de plaque en sandwich selon la revendication 1, dans lequel l'élément creux comprend des demi-coques.

3. Elément structurel de plaque en sandwich selon la revendication 1 ou 2, dans lequel l'élément creux comprend une pluralité de tubes allongés liés par des armatures s'étendant de manière générale parallèlement aux plaques métalliques extérieures.

4. Elément structurel de plaque en sandwich selon la revendication 3, dans lequel lesdits tubes sont formés d'un seul tenant avec les armatures de liaison en une seule unité.

5. Elément structurel de plaque en sandwich selon la revendication 3, dans lequel chacun desdits tubes est formé en tant qu'article distinct ayant au moins une armature de liaison saillante munie à ses extrémités distales d'un moyen d'accrochage.

6. Elément structurel de plaque en sandwich selon l'une quelconque des revendications 1, 2, 3 et 5, dans lequel l'élément creux comprend des pièces assemblées par pression.

7. Elément structurel de plaque en sandwich selon l'une quelconque des revendications précédentes, dans lequel l'élément creux est fait de polypropylène expansé.

8. Elément structurel de plaque en sandwich selon l'une quelconque des revendications 3 à 7, dans lequel ladite pluralité de tubes comprend des tubes ayant au moins deux formes ou tailles différentes.

9. Elément structurel de plaque en sandwich selon l'une quelconque des revendications 3 à 8 ou 6, dans lequel lesdites armatures de liaison sont pourvues d'une pluralité d'ouvertures.

10. Elément structurel de plaque en sandwich selon la revendication 1, 6 ou 7, dans lequel l'élément creux comprend une pluralité de tubes allongés distincts et au moins un élément de support pour tenir ledit tube allongé dans un agencement espacé.

11. Elément structurel de plaque en sandwich selon l'une quelconque des revendications précédentes, dans lequel l'élément creux est pourvu d'au moins une nervure de renforcement interne.

12. Elément structurel de plaque en sandwich selon l'une quelconque des revendications précédentes, dans lequel ledit élément creux est pourvu d'au moins une nervure externe pour renforcer et/ou espacer l'élément creux des plaques métalliques extérieures de l'élément structurel de plaque en sandwich ou d'autres éléments creux inclus dans l'élément structurel de plaque en sandwich.

13. Elément structurel de plaque en sandwich selon l'une quelconque des revendications précédentes, dans lequel ledit élément creux est pourvu d'un moyen de support pour recevoir et positionner au moins une plaque de renforcement.

14. Elément structurel de plaque en sandwich selon l'une quelconque des revendications précédentes, comprenant au moins deux couches d'éléments creux.

15. Elément structurel de plaque en sandwich selon l'une quelconque des revendications précédentes, dans lequel l'âme est faite d'un élastomère.

16. Procédé de fabrication d'un élément structurel de plaque en sandwich comprenant les étapes consistant à : fournir des première et deuxième plaques métalliques extérieures en relation espacée avec un élément creux en plastique extrudé ayant un espace intérieur situé entre elles ; injecter un plastique ou un polymère non durci pour remplir l'espace défini entre lesdites plaques métalliques extérieures sauf l'espace intérieur dudit élément creux en plastique extrudé ; et laisser ledit plastique ou polymère durcir pour coller lesdites plaques métalliques extérieures ensemble avec une résistance suffisante pour transférer les forces de cisaillement entre elles.
